# EUROPEAN PATENT SPECIFICATION

(11) **EP 2 613 499 B1**
(45) Date of publication and mention of the grant of the patent: **19.03.2014**
(21) Application number: 12305011.4
(22) Date of filing: 05.01.2012
(51) Int. Cl.: H04L 29/08, G06F 17/30, G06Q 10/06, H04L 12/58

(54) **A communication system for tagging communication artefact**
Kommunikationssystem zum Markieren von Kommunikationsartefakten
Système de communication pour l'étiquetage d'artefacts de communication

(43) Date of publication of application: 10.07.2013
(73) Proprietor: Alcatel Lucent, 75007 Paris (FR)
(72) Inventor: Sorokin, Roman, 92707 COLOMBES (FR)
(74) Representative: Therias, Philippe

(56) References cited:
- JP-A- 2001 188 797
- US-A1- 2004 199 867

## Description

The technical domain is the domain of communication systems, and particularly the managing of pertinent information relating to corporate projects.

The problem addressed here is the communication of information related to a given project, more particularly, to a newcomer to the project. It appears that, very often, information about a project is not kept in public documents or web pages, but exists in the heads of the people working on the project and is just discussed in mail threads, instant messaging sessions, phone talks, teleconferences, or other private by nature media.

The problem is to aggregate and store a knowledge that was just articulated on meetings and peer-to-peer discussions and is not kept intentionally, in order to make the information accessible to all the stakeholders, without a need to forward mail threads or retell meetings to them.

More particularly, an embodiment of the invention concerns a method to gather information about a given project in order to have it available to a newcomer to the project.

Some prior art systems, trying to address a similar problem offer the possibility for a user to share its emails or other communication artefacts, but the user is explicitly asked to manually copy each email into a given directory, from where it is published. This does not really answer the problem, since such an approach puts the entire burden on the user. This is exactly what is intended to avoid. One aim is to render the information public, while not changing the every day work habits of the users.

US 2004/199867 discloses a content management system for use in news media production, including data storage data retrieval data processing where a database system is adapted to store publishing content objects (PCOs) and metadata. The metadata may be associated with PCOs in the content management system. The system may also include a number of workstations where the PCOs are stored in a media neutral format to enable reuse of the PCOs in publications of multiple media. The content management system may further be adapted to perform a task of planning and co-ordinating usage of PCOs in one or more publications.

The object of the invention is a communication system, comprising a tagging means for tagging a communication artefact with at least one thematic contextual tag, a communication artefact storage for storing and retrieving at least one communication artefact, a storage means for automatically storing a tagged communication artefact in said communication artefact storage.

According to another feature, a communication artefact is an electronic mail, an electronic mail thread, an instant messaging session, a phone call recording, a phone call transcription, an audio conference recording, an audio conference transcription, a video conference recording, a video conference transcription, an audio file, a video file, a text file, a blog post, a web address, or any other file containing information.

According to another feature, a contextual tag comprises at least one keyword.

According to another feature, contextual tags are predefined by an authorized manager.

According to another feature, the communication system is a closed communication system, such as a corporate communication system.

According to another feature, the tagging means only authorises an owner of a communication artefact to tag its own communication artefact.

According to another feature, the tagging means can be applied to a communication artefact before the establishment of the associated communication, during the associated communication or after the end of the associated communication.

According to another feature, the tagging of a communication artefact is considered to render the communication artefact public.

According to another feature, the communication system further comprises a retrieving means for searching the communication artefact storage based at least on at least one tag.

According to another feature, the communication system further comprises an inserting means for manually inserting a communication artefact into the communication artefact storage.

Others features, details and advantages of the invention will become more apparent from the detailed illustrating description given hereafter with respect to the drawings on which:

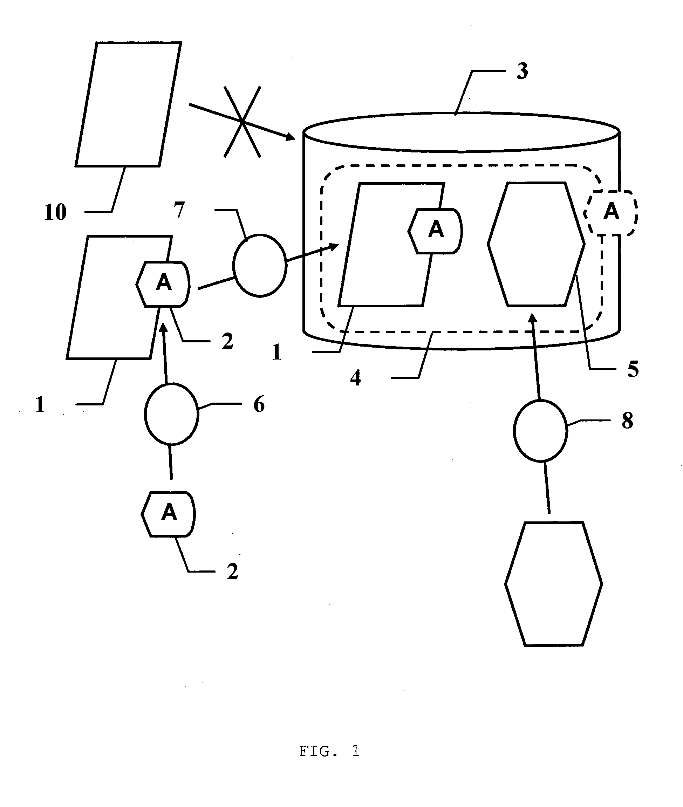

- figure 1 is a diagram showing an embodiment of the invention.

According to figure 1, a communication system, that is, a system managing at least one communication artefact 1, 10 comprises a communication artefact storage 3 where a communication artefact 1 can be stored for later retrieval and a storage means 7 able to get a communication artefact 1 or a copy of a communication artefact 1 and to store it in said communication artefact storage 3. Said communication system further comprises a tagging means 6 for tagging a communication artefact 1 with a thematic contextual tag 2. Said tagging means 6 allows a user of a communication system, to tag a communication artefact 1 by adding to it at least one tag 2. Said tag 2 then remains associated to said communication artefact 1.

As usual with tags, a tag 2 is thematic and characterizes by the content of said tag 2 the tagged object 1, here a communication artefact 1. As a unique feature, the tagging of a communication artefact 1 also triggers the storage means 7 to automatically store the communication artefact 1 or a copy of it in said communication artefact storage 3.

By doing so, the user tagging a communication artefact 1 does a double operation. The thematic tagging first provides a way to sort the communication artefact 1, e.g. to ease a future retrieval, and second it automatically stores the communication artefact 1 in a public repository, said communication artefact storage 3, that is, it publishes said communication artefact 1 that was eventually private before, so that it can be publicly accessed. This is advantageously done without any additional workload for the user.

Said automatic storing of a communication artefact 1 in a communication artefact storage 3 can be applied either immediately when said communication artefact 1 is tagged or later, e.g. if the storing means 7 acts in delayed mode.

In the present document, a communication artefact 1 can be any recording of any kind of communication, in any form. It can be e.g. an electronic mail which is a written record of a written communication. It can more generally be an electronic mail thread, that is, a set of electronic mails related to a given subject and/or linked by reply/transfer operations. It can also be an instant messaging session, that is, a written record of the messages exchanged during an instant messaging communication. It can also be a phone call recording, that is, an audio recording of a phone call or alternately a phone call transcription, that is, a written transcription, in text form, of a phone call, e.g. obtained by automatic a speech recognition tool. Similarly it can be an audio conference recording, in audio form, or an audio conference transcription, in text form. Similarly it can also be a video conference recording, in video or audio form, or a video conference transcription, in text form. It can also be an audio file, a video file, a text file, a blog post, a web address, or any other file containing information and/or related to a communication and/or to some information exchange.

In the present document, a contextual tag 2 is any means for tagging a communication artefact 1. It can be a keyword, a whole sentence, a set of keywords or sentences. Advantageously a tag 2 gives meaningful information about the tagged object 1, and can thus be expressed in a form meaningful for a human being.

According to an embodiment, contextual tags 2 are predefined by an authorized manager. This allows a central managing of said tags 2. A tag 2 may e.g. be defined for each project in a corporate environment. This allows a user, when tagging a communication artefact 1 to choose in a list of predefined tags 2. This also reduces the number of existing tags 2 when compared to a system where any user can create a new tag 2.

Obviously a system where any user can create a new tag 2 is also possible.

Tags 2 can be meaningful to a tagged object 1. E.g. a tag 2 can be "A" or "project A", meaning that a communication artefact 1 so tagged relates to the project A. So, when a newcomer to project A starts working on said project A, it can retrieve all communication artefacts 1 related to project A, in order to be quickly informed about said project A.

Tags 2 can also be tree like organized. For example if the former "project A" tag becomes to big to remain a discriminating tag 2, it can be divided into more precise tags such as "project A. design" "project A. marketing", "project A. production", and so on. All of the illustrative previous tags are related to project A, but a communication artefact 1 can be more precisely tagged to at least one sub project to which it is related. By doing so, communication artefacts 1 can be retrieved either by sub project or by the whole project. A retrieval based on the "project A. design" tag will only provide "project A. design" tagged communication artefacts 1. A retrieval based on the "project A" tag will provide "project A. design" and "project A. marketing" and "project A. production" and "project A" tagged communication artefacts 1.

According to another feature, a tag 2 can be either explicitly associated to a communication artefact 1 by a user, and/or can be automatically inherited from another already tagged communication artefact 1 to which it is related. For instance, a communication artefact is a mail produced in reply to an already tagged previous primary mail. Since the reply mail is probably related to the same context as the primary mail, the reply mail can be tagged with the same tag(s) 2 as the primary mail. This can be either automatic or proposed by default to the user when the user is about to tag said reply mail. The user can then choose to keep or to cancel any of the proposed tags 2, and/or to add any new tag 2.

One of the features described herein is a way to publish and publicise communication artefacts 1 that may be otherwise private by nature, such as mails or instant messages. This may not be applied to a public communication system, where the privacy of such communications must be kept. However, in the context of a corporate system, it can be considered that even private by nature communication artefacts are means dedicated to work and cannot really be considered private. Accordingly the communication system is advantageously a closed communication system, such as a corporate communication system.

In addition to the previous discussed point, a user can keep a communication artefact 1 private. This can be done implicitly by not tagging said communication artefact 1. This can also be done by using at least one dedicated "private" tag, or equivalent, that forbids the publication of said so tagged communication artefact 1.

This is illustrated in figure 1, where communication artefact 10 is not tagged, and thus will not be stored and published in communication artefact storage 3, as figured by the crossed arrow.

In order to further protect privacy, according to one feature, the tagging means 6 may only authorise an owner of a communication artefact 1 to tag its own communication artefact 1. Such a feature is linked to the publication of the communication artefact 1 that is automatically triggered by the tagging. Only the owner of a communication artefact 1 is allowed to determine if a communication artefact 1 can be so published.

For that purpose, the owner of a communication artefact 1 is typically considered to be the creator or the emitter of the communication or communication artefact 1. It can also be the receiver, or both the emitter and the receiver together.

The tagging operation must be kept easy to apply, so that the tagging operation gets a broad acceptance from the communication system's users. In order to ease said tagging, the tagging means 6 is designed so that it can be applied to a communication artefact 1 before the establishment of the associated communication. In that case, a communication artifact 1 can e.g. be pre created and already tagged, before the communication begins and fills said communication artifact 1. Advantageously, a communication artifact 1 can also be tagged during the associated communication, when the communication is in progress. At least a communication artifact 1 can also be tagged after the communication has ended and is recorded in said communication artifact 1.

As already discussed, the tagging of a communication artefact 1 is considered to render the communication artefact public. The tagging operation, which is typically an operation willingly applied by a user, then gives an authorisation to publish the communication artefact 1 and typically automatically triggers said publication.

The main purpose of the tagging and of the associated publication is to gather and to sort valuable information related to a given context for further retrieval. The communication system thus further comprises a retrieving means for searching the communication artefact storage 3. Such a retrieving means may be e.g. a database query tool. Said query tool allows to search the communication artefact storage 3 with a request comprising at least one tag 2 in order to retrieve all communication artefacts 1 matching said at least one tag 2, that is all communication artefacts 1 comprised in said communication artefact storage 3 tagged by at least said at least one tag 2. A request may obviously contain at least one tag 2, a combination of several tags, or a combination of at least one tag 2 and any other search criteria, such as e.g. the length or the storing date of a communication artefact 1.

This aims to provide a global information repository, say communication artefact storage 3, gathering all information/communications about a given theme/project. This can be done, as explained before, by tagging any communication artefact 1. However, some other information containers can be related to the same theme/project without the possibility or will, for any reason, to be tagged. To also enter said other communication artefact 5 in the communication artefact storage 3, the communication system, according to an embodiment, may advantageously further comprises an inserting means 8. Such an inserting means 8 allows a user to manually insert such a, e.g. non taggable, communication artefact 5 into the communication artefact storage 3. This can be done without tagging said communication artefact 5. However, said communication artefact 5 is stored in the communication artefact storage 3 the same way as a tagged communication artefact 1 and is "marked" as if it was tagged. By doing so, a retrieval based on tag 2 would also return said communication artefact 5, as if it was tagged. One possible way to obtain such a result, as illustrated in figure 1, is to store both tagged communication artefact 1 and non tagged communication artefact 5 in a common place 4 related to a given tag, e.g. "A" in said figure 1.

Such a non taggable communication artefact 5 can be e.g. a file or a web page.

## Claims

1. A communication system, comprising a tagging means (6) for tagging a communication artefact (1) with at least one thematic contextual tag (2), a communication artefact storage (3) for storing and retrieving at least one communication artefact (1), a storage means (7) for storing a tagged communication artefact (1) in said communication artefact storage (3), ***characterized in* that** the tagging of a communication artefact (1) with such a thematic contextual tag (2) triggers the storage means (7) to store said tagged communication artefact (1) or a copy of it in said communication artefact storage (3).

2. The communication system of claim **1,** wherein a communication artefact (1) is an electronic mail, an electronic mail thread, an instant messaging session, a phone call recording, a phone call transcription, an audio conference recording, an audio conference transcription, a video conference recording, a video conference transcription, an audio file, a video file, a text file, a blog post, a web address, or any other file containing information.

3. The communication system of claim **1** or **2,** wherein a contextual tag (2) comprises at least one keyword.

4. The communication system of any one of claims **1** to **3,** wherein contextual tags (2) are predefined by an authorized manager.

5. The communication system of any one of claims **1** to **4,** wherein the communication system is a closed communication system, such as a corporate communication system.

6. The communication system of any one of claims **1** or **5,** wherein the tagging means (6) only authorises an owner of a communication artefact (1) to tag its own communication artefact (1).

7. The communication system of any one of claims **1** to **6,** wherein the tagging means (6) can be applied to a communication artefact (1) before the establishment of the associated communication, during the associated communication or after the end of the associated communication.

8. The communication system of any one of claims **1** to **7,** wherein the tagging of a communication artefact (1) is considered to render said communication artefact (1) public.

9. The communication system of any one of claims **1** to **8,** further comprising a retrieving means for searching the communication artefact storage (3) based at least on at least one tag (2).

10. The communication system of any one of claims **1** to **9,** further comprising an inserting means (8) for manually inserting a communication artefact (5) into the communication artefact storage (3).

## Patentansprüche

1. Kommunikationssystem, umfassend ein Markierungsmittel (6) zum Versehen eines Kommunikationsartefaktes (1) mit zumindest einem thematischen kontextuellen Tag (2), eignen Kommunikationsartefakt-Speicher (3) zum Speichern und Abrufen zumindest eines Kommunikationsartefaktes (1), ein Speichermittel (7) zum Speichern eines mit einem Tag versehenen Kommunikationsartefaktes (1) in dem besagten Kommunikationsartefakt-Speicher (3), ***dadurch gekennzeichnet, dass*** das Versehen eines Kommunikationsartefaktes (1) mit einem solchen thematischen kontextuellen Tag (2) das Speichermittel (7) ansteuert, um das besagte ausgezeichnete Kommunikationsartefakt (1) oder eine Kopie davon in dem besagten Kommunikationsartefakt-Speicher (3) zu speichern.

2. Kommunikationssystem nach Anspruch **1**, wobei ein Kommunikationsartefakt (1) eine elektronische Post, ein E-Mail-Thread, eine Instant-Messaging-Sitzung, eine Telefonanrufaufzeichnung, eine Telefonanruftranskription, eine Audiokonferenzaufzeichnung, eine Audiokonferenztranskription, ein Videokonferenzaufzeichnung, eine Videokonferenztranskription, eine Audiodatei, eine Videodatei, eine Textdatei, ein Blog-Post, eine Webadresse oder eine beliebige sonstige eine Datei enthaltende Information ist.

3. Kommunikationssystem nach Anspruch **1** oder **2**, wobei ein kontextuelles Tag (2) zumindest ein Schlüsselwort umfasst.

4. Kommunikationssystem nach einem beliebigen der Ansprüche **1** bis **3**, wobei kontextuelle Tags (2) von einem autorisierten Verwalter vordefiniert werden.

5. Kommunikationssystem nach einem beliebigen der Ansprüche **1** bis **4**, wobei das Kommunikationssystem ein geschlossenes Kommunikationssystem wie beispielsweise ein Unternehmenskommunikationssystem ist.

6. Kommunikationssystem nach einem beliebigen der Ansprüche **1** bis **5**, wobei das Markierungsmittel (6) lediglich einen Eigentümer eines Kommunikationsartefaktes (1) ermächtigt, sein eigenes Kommunikationsartefakt (1) mit einem Tag zu versehen.

7. Kommunikationssystem nach einem beliebigen der Ansprüche **1** bis **6**, wobei das Markierungsmittel (6) auf ein Kommunikationsartefakt (1) vor Ausbau der assoziierten Verbindung, während der assoziierten Verbindung oder nach Beenden der assoziierten Verbindung angewendet werden kann.

8. Kommunikationssystem nach einem beliebigen der Ansprüche **1** bis **7**, wobei das Versehen eines Kommunikationsartefaktes (1) mit einem Tag erwogen wird, um das besagte Kommunikationsartefakt (1) öffentlich zu machen.

9. Kommunikationssystem nach einem beliebigen der Ansprüche **1** bis **8**, weiterhin umfassend ein Abrufmittel zum Durchsuchen des Kommunikationsartefakt-Speichers (3) auf der Basis von zumindest einem Tag (2).

10. Kommunikationssystem nach einem beliebigen der Ansprüche **1** bis **9**, weiterhin umfassend ein Einfügemittel (8) zum manuellen Einzügen eines Kommunikationsartefaktes (5) in den Kommunikationsartefakt-Speicher (3).

## Revendications

1. Système de communication, comprenant des moyens de balisage (6) pour baliser un artefact de communication (1) avec au moins une balise (2) contextuelle thématique, un dispositif de stockage d'artefact de communication (3) pour stocker et récupérer au moins un artefact de communication (1), des moyens de stockage (7) pour stocker un artefact de communication (1) balisé dans ledit dispositif de stockage d'artefact de communication (3), ***caractérisé en ce que*** le balisage d'un artefact de communication (1) avec une telle balise (2) contextuelle thématique déclenche les moyens de stockage (7) pour stocker ledit artefact de communication (1) balisé ou une copie de celui-ci dans ledit dispositif de stockage d'artefact de communication (3).

2. Système de communication selon la revendication **1**, avec lequel un artefact de communication (1) est un courrier électronique, un fil conducteur de courrier électronique, une session de messagerie instantanée, un enregistrement d'appel téléphonique, une transcription d'appel téléphonique, un enregistrement de conférence audio, une transcription de conférence audio, un enregistrement de vidéoconférence, une transcription de vidéoconférence, un fichier audio, un fichier vidéo, un fichier texte, un billet de blog, une adresse Web ou toute autre information contenant un fichier.

3. Système de communication selon la revendication **1** ou **2**, avec lequel une balise (2) contextuelle contient au moins un mot-clé.

4. Système de communication selon l'une quelconque des revendications **1** à **3**, avec lequel des balises (2) contextuelles sont prédéfinies par un administrateur autorité.

5. Système de communication selon l'une quelconque des revendications **1** à 4, avec lequel le système de communication est un système de communication fermée, comme un système de communication d'entreprise.

6. Système de communication selon l'une quelconque des revendications **1** à 5, avec lequel les moyens de balisage (6) autorisent seulement un propriétaire d'un artefact de communication (1) à baliser son propre artefact de communication (1).

7. Système de communication selon l'une quelconque des revendications **1** à 6, avec lequel les moyens de balisage (6) peuvent être appliqués à un artefact de communication (1) avant l'établissement de la communication associée, pendant la communication associée ou après la fin de la communication associée.

8. Système de communication selon l'une quelconque des revendications **1** à 7, avec lequel le balisage d'un artefact de communication (1) est considéré rendre public ledit artefact de communication (1).

9. Système de communication selon l'une quelconque des revendications **1** à 8, comprenant en outre des moyens de récupération pour effectuer une recherche dans le dispositif de stockage d'artefact de communication (3) en se basant sur au moins une balise (2).

10. Système de communication selon l'une quelconque des revendications **1** à **9**, comprenant en outre des moyens d'insertion (8) pour insérer manuellement un artefact de communication (5) dans le dispositif de stockage d'artefact de communication (3).
